# FASCICULE DE BREVET EUROPEEN

(11) **EP 3 000 724 B1**
(45) Date de publication et mention de la délivrance du brevet: **09.11.2016**
(21) Numéro de dépôt: 15182291.3
(22) Date de dépôt: 25.08.2015
(51) Int. Cl.: B64C 7/00, B64C 27/32, B64C 27/04

(54) **CARENAGE DE ROTOR, ROTOR ET AERONEF**
ROTORVERKLEIDUNG, ROTOR UND LUFTFAHRZEUG
A ROTOR FAIRING, A ROTOR, AND AN AIRCRAFT

(30) Priorité: 26.09.2014 FR 1402170
(43) Date de publication de la demande: 30.03.2016
(73) Titulaire: Airbus Helicopters, 13725 Marignane Cedex (FR)
(72) Inventeur: MORET, Robin, 13300 SALON DE PROVENCE (FR)
(74) Mandataire: Pouillot, Laurent Pierre Paul

(56) Documents cités:
- EP-A1- 2 727 832
- FR-A- 1 277 459
- FR-A1- 2 762 582

## Description

La présente invention concerne un carénage d'un rotor de sustentation d'un aéronef, ainsi qu'un aéronef muni d'un tel carénage et notamment un giravion.

Un giravion comporte classiquement une cellule s'étendant d'un nez vers une queue. Cette queue peut comprendre une poutre de queue portant une dérive et des empennages.

La cellule peut porter au moins un rotor assurant au moins partiellement la sustentation voire la propulsion du giravion. Un tel rotor est dénommé « rotor de sustentation » par la suite, et parfois « rotor principal » par l'homme du métier.

Pour réduire la traînée d'un rotor de sustentation, un giravion peut comporter un carénage entourant la tête de ce rotor de sustentation. Le carénage prend la forme d'une enveloppe fermée. Chaque pale du rotor de sustentation traverse alors une ouverture de cette enveloppe.

Le carénage de la tête du rotor est un moyen efficace pour réduire la traînée totale d'un giravion, et ainsi pour améliorer l'efficacité aérodynamique du giravion et ses performances.

Toutefois, un tel carénage peut constituer un handicap en termes de maintenance.

En effet, un carénage peut comporter une demi-coquille inférieure et une demi-coquille supérieure qui est en forme de dôme. Le dôme est fixé par de multiples éléments de fixation de type visserie à un support lié à la tête du rotor.

Néanmoins, la tête d'un rotor est un élément devant être régulièrement inspecté, et doit donc rester facilement accessible. En particulier, la tête du rotor doit être visuellement inspectée lors d'une visite prévol, à savoir avant la mise en route de l'aéronef.

Pour accéder à une tête de rotor munie d'un dôme de carénage vissé, un opérateur doit donc démonter le dôme. Ce mode de réalisation impose un temps de maintenance non négligeable, même pour un simple accès visuel aux composants du rotor tels que des butées sphériques utilisées pour la fixation des pales ou des rotules de bielles de pas par exemple.

Un carénage de tête de rotor muni d'un dôme directement fixé à la tête du rotor peut alors impliquer, à chaque inspection du rotor, un démontage/remontage pénible et chronophage des éléments de fixation du dôme.

Par suite, peu de giravions sont munis d'un carénage de la tête d'un rotor. En effet, le gain en performance en vol peut s'avérer insuffisant pour justifier l'inconvénient posé par le carénage en termes d'utilisation opérationnelle du giravion.

Le document FR 2.762.582, qui est considéré l'état de la technique plus proche, décrit un dôme pour une tête de rotor. Ce dôme est muni de deux demi-coques diamétralement séparées l'une de l'autre.

Les demi-coques sont reliées à la tête d'un rotor par un mécanisme combiné de pivotement et de coulissement. Ce mécanisme comporte deux rails sur lesquels les demi-coques coulissent selon un sens longitudinal sensiblement perpendiculaire à l'axe de rotation du rotor. De plus, chaque rail comporte un tronçon central fixé sur la tête du rotor, et deux tronçons d'extrémité qui peuvent être pivotés par rapport au tronçon central.

Les documents FR 1.277.459 et US 4.212.588 décrivent des carénages de rotor.

Le document EP2727832, qui montre toutes les caractéristiques du préambule de la revendication 1, est aussi connu.

La présente invention a alors pour objet de proposer un carénage d'une tête d'un rotor visant à permettre un accès visuel rapide à des organes de la tête du rotor.

Selon l'invention, un carénage d'un rotor comprend une demi-coquille supérieure destinée à être à l'aplomb d'une tête de rotor. Cette demi-coquille supérieure est munie d'une unique coque supérieure en forme de dôme.

En outre, la demi-coquille supérieure est mobile. Le carénage comporte alors un dispositif de déplacement pour déplacer en élévation la demi-coquille supérieure. Le dispositif de déplacement comporte une glissière, cette glissière étant munie d'une partie dénommée « partie fixe » destinée à être solidarisée à la tête du rotor à équiper, cette glissière étant munie d'une partie dénommée « partie mobile » solidarisée à la demi-coquille supérieure, la partie mobile coulissant en élévation le long de la partie fixe selon un axe en élévation. De plus, le dispositif de déplacement comporte un dispositif de mobilité coopérant avec la partie mobile pour translater la partie mobile par rapport à la partie fixe entre une position extrémale fermée et une position extrémale ouverte incluses, la demi-coquille supérieure étant dans la position extrémale fermée en vol et dans la position extrémale ouverte durant une opération de maintenance.

On qualifie de « mobile » un organe apte à effectuer un mouvement translatif lorsque le carénage est fixé sur un rotor. A l'inverse, on qualifie de « fixe » un organe inapte à effectuer un tel mouvement translatif lorsque le carénage est fixé sur un rotor. Ainsi, la partie fixe peut effectuer un mouvement rotatif autour de l'axe de rotation du rotor conjointement avec la tête du rotor, mais ne peut pas coulisser le long de l'axe en élévation lorsque le carénage est fixé sur un rotor.

En outre, la partie mobile peut être agencée autour de la partie fixe ou au sein de la partie fixe pour coulisser le long de cette partie fixe.

Le document FR 2.762.582 propose un dôme muni de deux demi-coques coulissant dans un plan de translation perpendiculaire à un axe en élévation du dôme, chaque demi-coque étant inclinable par rapport à ce plan de translation.

A l'inverse, l'invention propose une demi-coquille supérieure comprenant une unique coque en forme de dôme. Cette demi-coquille supérieure peut toutefois être déplacée en élévation. En effet, le dispositif de mobilité permet de faire translater en élévation la demi-coquille supérieure par le biais d'une liaison glissière matérialisée par la glissière.

Dans la position extrémale fermée, la demi-coquille supérieure se trouve au plus près de la tête du rotor. La demi-coquille est notamment positionnée dans la position extrémale fermée en vol pour améliorer les caractéristiques aérodynamiques du rotor. Le carénage présente ainsi un espacement minimal entre la demi-coquille supérieure et la tête du rotor voire la partie fixe par exemple.

A l'inverse, la demi-coquille supérieure est éloignée au maximum de la tête du rotor dans la position extrémale ouverte. Le carénage présente ainsi un espacement maximal entre la demi-coquille supérieure et la tête du rotor, voire entre la demi-coquille supérieure et la partie fixe par exemple. Par suite, la demi-coquille supérieure est éloignée de la tête du rotor pour permettre à un opérateur de réaliser une opération de maintenance.

Une telle opération de maintenance peut alors être entreprise avec une relative facilitée.

Un opérateur manoeuvre en effet le dispositif de mobilité pour faire coulisser la partie mobile de la glissière le long de la partie fixe de cette glissière afin de positionner la demi-coquille dans la position extrémale fermée ou la position extrémale ouverte.

Par rapport à des réalisations de l'état de la technique, l'invention offre une possibilité très simple d'accéder visuellement aux éléments de la tête d'un rotor lors des inspections périodiques réglementaires. Cette solution ne constitue pas pour l'opérateur une contrainte forte par rapport à l'inspection d'une tête non carénée en permettant un accès visuel aisé à la tête du rotor.

De plus, l'invention offre une diminution significative de la traînée totale de l'aéronef en vol en carénant au moins partiellement le rotor.

Par ailleurs, ce carénage peut libérer toute la circonférence du moyeu pour faciliter l'accès à tous les composants du moyeu sans exception, contrairement à certaines solutions employant des rails longitudinaux par exemple.

Par ailleurs, le carénage est éventuellement amovible. L'installation d'un système de levage coopérant avec le rotor reste donc possible.

Le carénage peut de plus comporter une ou plusieurs des caractéristiques additionnelles qui suivent.

Ainsi, le carénage peut comporter un dispositif de signalisation pour indiquer la position de la demi-coquille supérieure, ce dispositif de signalisation ayant au moins un capteur pour déterminer si la demi-coquille supérieure est dans la position extrémale ouverte et/ ou dans la position extrémale fermée et un moyen de visualisation relié audit capteur.

Le capteur peut être un capteur de position mécanique ou électrique.

Par exemple, le moyen de visualisation est un moyen d'alerte visuel ou sonore. Ce moyen de signalisation peut éventuellement être activé lorsque la demi-coquille supérieure est dans la position extrémale ouverte pour éviter que l'aéronef vole dans ces conditions.

Le moyen de visualisation peut ainsi comprendre un témoin visible depuis le sol ou depuis le cockpit permettant d'alerter l'équipage ou un observateur si le carénage n'est pas verrouillé en position « vol », à savoir lorsque la demi-coquille supérieure est dans la position extrémale ouverte. L'équipage doit alors vérifier avant le vol qu'un témoin « carénage non-verrouillé » est bien effacé.

Par ailleurs, le carénage peut comporter une demi-coquille inférieure en regard de la demi-coquille supérieure, une portion d'une périphérie de la demi-coquille supérieure dite « périphérie supérieure de contact » étant au niveau d'un plan de jonction en contact étanche avec une portion d'une périphérie de la demi-coquille inférieure dite « périphérie inférieure de contact » dans la position extrémale fermée, le plan de jonction étant perpendiculaire à l'axe en élévation, la demi-coquille supérieure comprenant une pluralité d'alvéoles qui sont chacune en regard d'une alvéole de la demi-coquille inférieure pour permettre le passage d'une pale.

La demi-coquille inférieure peut comprendre une unique coque en forme de dôme inversé, soit en forme de U.

Dès lors, lorsque la demi-coquille supérieure est dans la position extrémale fermée, le carénage prend la forme d'une enveloppe. Cette enveloppe est alors uniquement ouverte au niveau des alvéoles pour pouvoir être traversée radialement par une pale attachée à la tête du rotor.

Les deux demi-coquilles sont alors jointives dans un plan de jonction sensiblement perpendiculaire à l'axe de rotation du rotor, et ajourées de manière à permettre le passage des pales en prenant en compte leurs débattements.

La demi-coquille supérieure et la demi-coquille inférieure peuvent être emboitées l'une dans l'autre dans la position extrémale fermée, la périphérie inférieure de contact coopérant par interférence de forme avec la périphérie supérieure de contact.

Les demi-coquilles présentent ainsi une interface adaptée à la jonction de ces deux demi-coquilles. Cette interface permet de positionner naturellement les demi-coquilles l'une par rapport à l'autre (concentricité et indexation circulaire) lorsque la demi-coquille supérieure est approchée de la demi-coquille inférieure. Par exemple une surface de contact conique permet l'auto-centrage des demi-coquilles l'une par rapport à l'autre, et un détrompeur conique assure l'indexation.

Un système d'étanchéité usuel peut être disposé au niveau de la jonction des deux demi-coquilles de manière à limiter les fuites d'écoulement d'air produisant des perturbations aérodynamiques en vol. De même, les alvéoles peuvent comprendre un système d'étanchéité.

Le dispositif de mobilité peut revêtir de multiples formes.

Selon un premier mode de réalisation, le dispositif de mobilité comporte un actionneur attaché à la partie mobile.

La demi-coquille supérieure est alors montée sur un actionneur tel qu'un actionneur hydraulique, pneumatique ou électrique. Cet actionneur est contrôlé par un opérateur pour éloigner ou rapprocher la demi-coquille supérieure de la demi-coquille inférieure.

Cet actionneur peut être relié à des capteurs de position haut et bas. Ces capteurs de position haut et bas permettant d'arrêter l'actionneur respectivement lorsque la demi-coquille supérieure a atteint la position extrémale ouverte et la position extrémale fermée.

Selon ce premier mode de réalisation, le verrouillage de la demi-coquille supérieure dans la position extrémale fermée peut être assuré directement par l'actionneur, même en cas d'interruption de sa source d'énergie.

Selon un deuxième mode de réalisation, le dispositif de mobilité comporte une poignée attachée à la partie mobile.

Selon ce deuxième mode de réalisation, un opérateur saisit la poignée pour tirer ou pousser la demi-coquille supérieure.

Ce deuxième mode de réalisation présente l'avantage d'être relativement simple.

Par exemple, la poignée est une poignée articulée comportant un segment inférieur articulé à la partie mobile et un segment supérieur articulé au segment inférieur.

Une telle poignée articulée peut être rétractée sur elle-même pour minimiser son encombrement en vol.

En outre, la poignée est favorablement logée dans un logement interne de la demi-coquille supérieure, ce logement étant fermé de manière réversible par une trappe d'accès. La trappe d'accès peut être circulaire. De plus, la trappe d'accès peut comprendre un verrou pour garantir sa fermeture en vol.

En vol, la poignée est disposée dans un logement fermé pour ne pas engendrer de perturbations aérodynamiques. L'utilisation d'une poignée articulée ou rétractable facilite un tel agencement.

De plus, la trappe d'accès peut être munie d'une tirette, cette tirette comportant une extrémité libre portant un moyen d'agrafage élastique en prise sur ladite poignée lorsque la trappe d'accès ferme ledit logement.

La tirette permet de faciliter l'extraction de la poignée lorsque la trappe d'accès est ouverte. Une rotation de la trappe d'accès permet en effet d'exercer un effort de traction sur la poignée.

De plus, la tirette peut tendre à maintenir la trappe d'accès fermée en vol.

En outre, la poignée peut être reliée à la partie mobile par un support, ce support étant articulé à la partie mobile et étant mobile en rotation par rapport à la partie mobile autour de l'axe en élévation du carénage, le support étant relié à au moins un doigt de verrouillage par une came pour qu'une rotation du support induise une translation de chaque doigt de verrouillage, la partie fixe comportant au moins un orifice par doigt de verrouillage, ladite partie mobile étant immobilisée par rapport à la partie fixe quand au moins un doigt de verrouillage pénètre dans un desdits orifices.

Ce système permet de verrouiller la demi-coquille dans au moins une position par rapport à la partie fixe à l'aide d'un doigt de verrouillage manoeuvré mécaniquement.

En effet, un opérateur tourne la poignée pour déplacer les doigts de verrouillage selon une direction par exemple orthogonale à l'axe en élévation. Lorsqu'au moins un doigt de verrouillage est enfiché dans un orifice de la partie fixe, la demi-coquille supérieure devient solidaire de la partie fixe.

Par exemple, la partie fixe comporte un orifice supérieur à l'aplomb d'un orifice inférieur pour chaque doigt de verrouillage, chaque doigt de verrouillage étant logé dans un orifice supérieur dans la position extrémale ouverte de la demi-coquille supérieure, chaque doigt de verrouillage étant logé dans un orifice inférieur dans la position extrémale fermée de la demi-coquille supérieure.

Dès lors, les doigts de verrouillage permettent le verrouillage de la demi-coquille supérieure du carénage dans ses deux positions extrêmes, à savoir dans la position extrémale fermée et dans la position extrémale ouverte.

Par ailleurs, le carénage peut comporter un moyen d'assistance pour assister la manoeuvre de la demi-coquille supérieure, ce moyen d'assistance comportant un organe élastique exerçant un effort de déploiement sur la demi-coquille supérieure tendant à la positionner dans la position extrémale ouverte.

Selon cette variante, l'organe élastique peut être un ressort ou un vérin à air comprimé pour assister l'opérateur dans la phase de relevage de la demi-coquille supérieure.

Pour que la manipulation du carénage ne soit pas considérée comme une contrainte par rapport un rotor dépourvu de carénage, cette manipulation doit si possible être réalisée dans un temps très court. Dès lors, l'emploi d'une assistance mécanique pour le relevage peut s'avérer utile.

Un tel organe élastique est favorablement interposé entre la partie mobile et la partie fixe.

Par ailleurs, l'effort de déploiement peut être inférieur au poids de ladite demi-coquille supérieure. Cet effort de déploiement permet d'accompagner le déplacement de la demi-coquille supérieure.

Par suite, la demi-coquille supérieure peut retourner dans la position extrémale fermée sous son propre poids.

Outre un carénage, l'invention vise un rotor muni d'une tête de rotor. Cette tête du rotor comporte d'une part un mât tournant autour d'un axe de rotation et d'autre part un moyeu solidaire dudit mât, ledit moyeu portant une pluralité de pales. Ce rotor comporte un carénage selon l'invention, la partie fixe de la glissière étant solidarisée par des moyens de fixation réversibles soit au moyeu soit au mât.

Le mécanisme possède alors un débattement suffisant pour que la demi-coquille supérieure puisse d'une part être complètement surélevée au-dessus de la tête du rotor lors des opérations de maintenance, et d'autre part venir au plus près de la tête du rotor pour les phases de vol.

Ce carénage est en outre amovible pour permettre une opération de levage par le moyeu sans gêne spécifique, en particulier lors d'une opération de dépose de l'ensemble mécanique complet.

Ce rotor peut de plus comporter une ou plusieurs des caractéristiques qui suivent

Par exemple, la partie fixe s'étend au moins partiellement dans ledit mât.

Un mât d'un rotor est usuellement creux. La glissière est alors agencée selon cette variante dans le mât. Cet agencement permet à la glissière de ne pas gêner des opérations de maintenance, contrairement à des rails de certains arts antérieurs.

Par ailleurs, le carénage s'étend en élévation le long d'un axe en élévation confondu avec l'axe de rotation.

Cet axe en élévation est favorablement un axe de symétrie du carénage. Dès lors, cet agencement tend à minimiser les risques de création d'un balourd avec le carénage.

En outre, le carénage peut comporter une demi-coquille inférieure, la demi-coquille inférieure étant fixée à la tête du rotor.

Outre un rotor, l'invention vise un aéronef comportant un tel rotor.

L'invention et ses avantages apparaîtront avec plus de détails dans le cadre de la description qui suit avec des exemples donnés à titre illustratif en référence aux figures annexées qui représentent :
- la figure 1, une vue d'un aéronef muni d'un carénage selon un premier mode de réalisation dans la position extrémale fermée,
- la figure 2, une vue d'un aéronef muni d'un carénage selon un premier mode de réalisation dans la position extrémale ouverte,
- la figure 3, une vue d'un aéronef muni d'un carénage selon un deuxième mode de réalisation dans la position extrémale fermée,
- la figure 4, une vue illustrant une came entraînant en translation deux doigts de verrouillage,
- la figure 5, une vue d'un aéronef muni d'un carénage selon le deuxième mode de réalisation ayant une trappe d'accès ouverte et des doigts de verrouillage engagés dans une partie fixe d'une glissière,
- la figure 6, une vue d'un aéronef muni d'un carénage selon le deuxième mode de réalisation ayant une trappe d'accès ouverte et des doigts de verrouillage désengagés d'une partie fixe d'une glissière,
- la figure 7, une vue d'un aéronef muni d'un carénage selon le deuxième mode de réalisation dans la position extrémale ouverte,
- la figure 8, une partie fixe muni de logements haut à l'aplomb de logements bas,
- la figure 9, les périphéries de deux demi-coquilles, et
- la figure 10, une vue illustrant un système à bielles entraînant en translation deux doigts de verrouillage.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

La première direction X et la deuxième direction Y forment conjointement un plan dit « plan horizontal XY » par commodité.

Enfin, la troisième direction Z est dite en élévation. L'expression « en élévation » est relative à toute direction parallèle à la troisième direction Z.

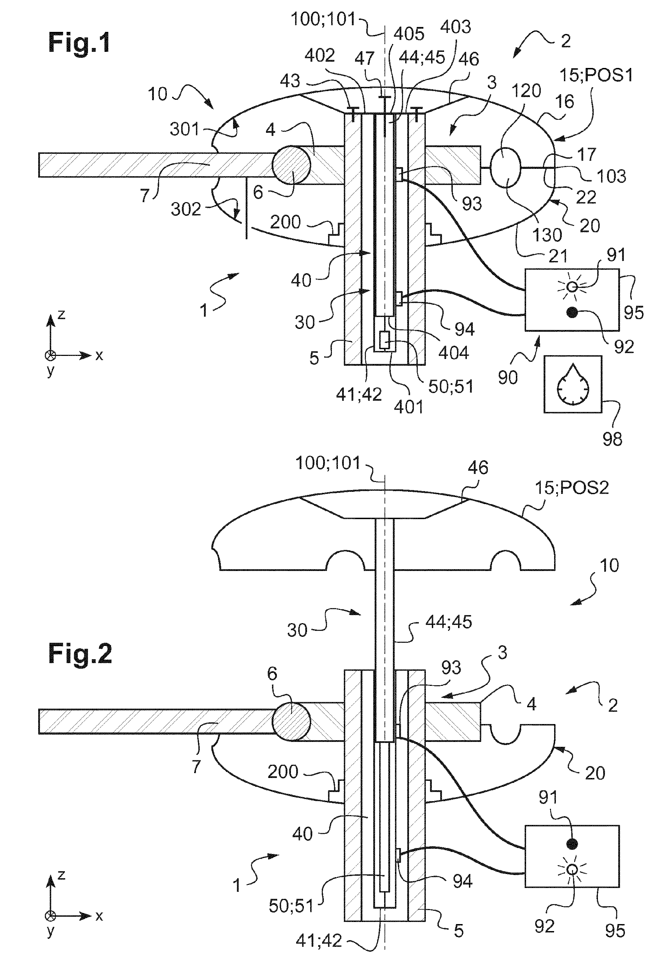

La figure 1 présente un aéronef 1. En particulier, l'aéronef 1 peut être un giravion.

Cet aéronef 1 comporte un rotor 2 selon l'invention. Pour ne pas alourdir inutilement la figure 1, seul le rotor 2 est représenté sur cette figure.

Ce rotor 2 effectue un mouvement rotatif autour d'un axe de rotation 100.

Le rotor 2 est pourvu d'une tête 3 portant une pluralité de pales 7. Plus précisément, la tête 3 est munie d'un mât 5 portant un moyeu 4. Chaque pale est alors articulée au moyeu 4, par une articulation 6 par exemple.

De plus, le rotor 2 comprend un carénage 10 selon un premier mode de réalisation de l'invention.

Quelle que soit la réalisation, ce carénage peut comporter une demi-coquille dite « demi-coquille inférieure 20 ». Une telle demi-coquille inférieure 20 peut comprendre une unique demi-coque dite « demi-coque inférieure 21 » qui a des sections diamétrales en forme d'un U.

La demi-coquille inférieure 20 est solidarisée à la tête 3 du rotor par des moyens usuels. Par exemple, la demi-coquille inférieure 20 est fixée par une cornière 200 au mât 5. De manière alternative ou en complément, la demi-coquille inférieure 20 est solidarisée au moyeu 4.

Quelle que soit la variante, la demi-coquille inférieure est immobile par rapport à la tête 3 du rotor.

Par ailleurs, le carénage est muni d'une demi-coquille dite « demi-coquille supérieure 15 ».

Une telle demi-coquille supérieure 15 peut comprendre une unique demi-coque dite «demi-coque supérieure 16 » qui a des sections diamétrales en forme d'un U inversé. Dès lors, la demi-coque supérieure 16 et la demi-coque inférieure 21 présentent chacune des surfaces internes 301, 302 concaves en regard l'une de l'autre.

La demi-coque supérieure 16 représente alors un dôme situé à l'aplomb de la tête 3 du rotor et de la demi-coque inférieure 21.

Par ailleurs, la demi-coquille supérieure 15 et la demi-coquille inférieure 20 sont chacune munies d'alvéoles. Ainsi, la demi-coquille supérieure 15 comporte une alvéole dite « alvéole supérieure 120 » par pale, et la demi-coquille inférieure 20 comporte une alvéole dite « alvéole inférieure 130 » par pale. Chaque alvéole supérieure est alors en regard d'une alvéole inférieure pour matérialiser un passage du carénage traversé par une pale.

Contrairement à la demi-coquille inférieure 20, la demi-coquille supérieure 15 est mobile par rapport à la tête 3 du rotor.

En effet, la demi-coquille supérieure 15 peut effectuer un mouvement translatif le long d'un axe en élévation 101. Cet axe en élévation 101 est un axe de symétrie des demi-coquilles. En outre, cet axe en élévation 101 est favorablement confondu avec l'axe de rotation 100.

Par conséquent, la demi-coquille supérieure 15 peut être déplacée sur requête d'une position extrémale fermée POS1 visible sur la figure 1 vers une position extrémale ouverte POS2 visible sur la figure 2.

Dans la position extrémale fermée POS1, la demi-coquille supérieure 15 repose sur la demi-coquille inférieure 20. La demi-coquille supérieure 15 et la demi-coquille inférieure 20 forment alors une enceinte fermée. Cette enceinte est toutefois ouverte sur l'extérieur de l'aéronef via les passages formés par les alvéoles 120, 130 et via un passage de la demi-coquille inférieure traversée par le mât 5 du rotor.

Dans cette position extrémale fermée POS1, une portion d'une périphérie de la demi-coquille supérieure 15 dite « périphérie supérieure de contact 17 » est au niveau d'un plan de jonction 103 en contact étanche avec une portion d'une périphérie de la demi-coquille inférieure dite « périphérie inférieure de contact 22 ». Ce plan de jonction est parallèle au plan horizontal XY, orthogonal à l'axe en élévation 101 et orthogonal à l'axe de rotation 100.

La périphérie supérieure de contact 17 correspond à la portion de cette périphérie de la demi-coquille supérieure 15 qui ne délimite pas une alvéole supérieure. De même, la périphérie inférieure de contact 22 correspond à la portion de la périphérie de la demi-coquille inférieure 20 qui ne délimite pas une alvéole inférieure.

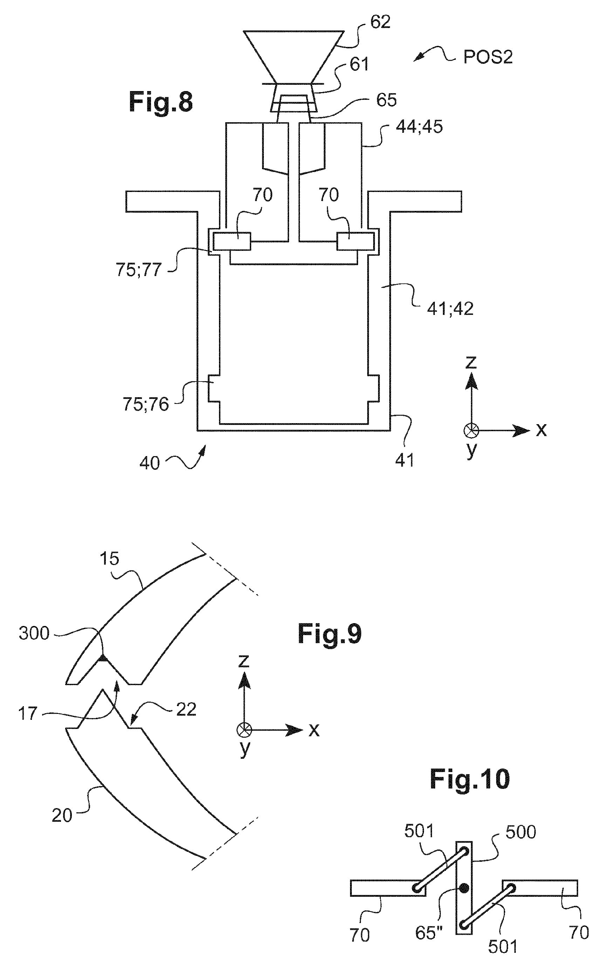

En référence à la figure 9, la demi-coquille supérieure 15 et la demi-coquille inférieure 20 sont emboitées éventuellement l'une dans l'autre dans la position extrémale fermée POS1. La périphérie inférieure de contact 22 coopère alors par interférence de forme avec la périphérie supérieure de contact 17. Par exemple, des profils coniques sont utilisés pour assurer ce contact.

En outre, un moyen d'étanchéité 300 peut être utilisé à l'interface entre les demi-coquilles. Un tel moyen d'étanchéité peut comprendre un joint par exemple.

En référence à la figure 1, le carénage comprend un dispositif de déplacement 30 pour déplacer la demi-coquille supérieure 15. Ce dispositif de déplacement est pourvu d'une glissière 40.

La glissière 40 inclut alors une partie fixe 41 qui est solidarisée à la tête 3 du rotor 2. La partie fixe 41 peut selon la variante être fixée de manière réversible au moyeu ou au mât.

Par exemple, la partie fixe 41 comporte un cylindre dit « cylindre fixe 42 ». Ce cylindre fixe 42 s'étend en élévation d'un fond 401 vers une extrémité ouverte 402. Cette extrémité ouverte 402 est alors solidaire d'un épaulement 403. Cet épaulement 403 est alors fixé à la tête 3 par des moyens de fixation réversibles 43, tels que des vis par exemple.

En outre, la partie fixe 41 s'étend favorablement au sein du mât 5. En particulier, le cylindre fixe 42 s'étend selon la figure 1 dans le mât 5, l'épaulement 403 reposant sur l'extrémité du mât.

La glissière comporte de plus une partie mobile 44 qui est déplaçable en translation par rapport à la partie fixe 41.

La partie mobile 44 est solidarisée à la demi-coquille supérieure 15, par exemple par un socle 46.

Dès lors, la partie mobile 44 et la partie fixe 41 forment conjointement une liaison glissière. En effet, la partie mobile 44 peut glisser le long de la partie fixe de manière à coulisser le long de l'axe en élévation. La partie fixe 41 représente donc un moyen de guidage en translation de la partie mobile 44.

Par exemple, la partie mobile 44 comporte un cylindre creux dit « cylindre mobile 45 ». Ce cylindre mobile 45 s'étend en élévation d'un fond 404 vers une extrémité 405. Cette extrémité 405 est alors solidaire d'un socle 46 solidarisé à la demi-coquille supérieure 15. Par suite, une translation de la partie mobile 44 entraîne une translation identique de la demi-coquille supérieure 15.

En outre, le cylindre mobile peut être agencé dans le cylindre fixe ou autour de ce cylindre fixe.

Par ailleurs, le carénage peut comprendre un dispositif de signalisation 90 ayant pour fonction d'indiquer visuellement la position de la demi-coquille supérieure 15. Ce dispositif de signalisation 90 comprend alors au moins un capteur 93, 94 pour déterminer si la demi-coquille supérieure 15 est dans la position extrémale ouverte POS2 et/ ou dans la position extrémale fermée POS1. Par exemple, un premier capteur de position 93 permet de déterminer si la demi-coquille supérieure 15 est dans la position extrémale ouverte POS2 et un deuxième capteur de position 94 permet de déterminer si la demi-coquille supérieure 15 est dans la position extrémale fermée POS1.

Chaque capteur est relié à un moyen de visualisation 95. Ce moyen de visualisation peut comprendre au moins un voyant lumineux qui s'allume si la demi-coquille supérieure 15 est dans la position extrémale ouverte POS2. Par exemple, un premier voyant lumineux 91 s'allume si la demi-coquille supérieure 15 est dans la position extrémale fermée POS1 et un deuxième voyant lumineux 92 s'allume si la demi-coquille supérieure 15 est dans la position extrémale ouverte POS2.

En outre, un système peut permettre la reprise des efforts aérodynamiques de la demi-coquille supérieure supérieure directement sur le mât de manière à ce que ces efforts ne transitent pas par le dispositif de déplacement.

Par ailleurs, le dispositif de déplacement 30 comporte un dispositif de mobilité 50 pour déplacer la partie mobile 44. Par conséquent, le dispositif de déplacement 30 comporte un guide formé par la glissière 40, et un dispositif de mobilité 50.

Le dispositif de mobilité 50 est alors activé pour :
- soit écarter la demi-coquille supérieure 15 de la demi-coquille inférieure 20 durant une opération de maintenance en déplaçant la demi-coquille supérieure de la position extrémale fermée POS1 vers la position extrémale ouverte POS2,
- soit plaquer la demi-coquille supérieure 15 contre la demi-coquille inférieure 20 durant un vol en déplaçant la demi-coquille supérieure de la position extrémale ouverte POS2 vers la position extrémale fermée POS1.

Selon le premier mode de réalisation de la figure 1, le dispositif de mobilité 50 comporte un actionneur 51 attaché à la partie mobile 44. Par exemple, cet actionneur s'étend entre un fond de la partie mobile et un fond de la partie fixe.

Cet actionneur peut être relié à un dispositif de commande 98. Ce dispositif de commande comprend par exemple un bouton pouvant être manoeuvré manuellement.

Pour effectuer une opération de maintenance, un opérateur peut alors manoeuvrer le dispositif de commande 98. Ce dispositif de commande 98 transmet alors un ordre à l'actionneur 51, sous la forme d'un signal électrique par exemple.

En référence à la figure 2, l'actionneur 51 s'étend pour éloigner la demi-coquille supérieure 15 de la tête du rotor. L'extension de l'actionneur peut être arrêtée automatiquement par le premier capteur de position 93 par exemple. L'actionneur maintient alors la demi-coquille supérieure 15 dans la position extrémale ouverte POS2. L'opérateur peut alors inspecter la tête du rotor.

Le dispositif de visualisation indique en outre la position ouverte de la demi-coquille supérieure 15.

Pour fermer le carénage, l'opérateur peut de nouveau manoeuvrer le dispositif de commande 98.

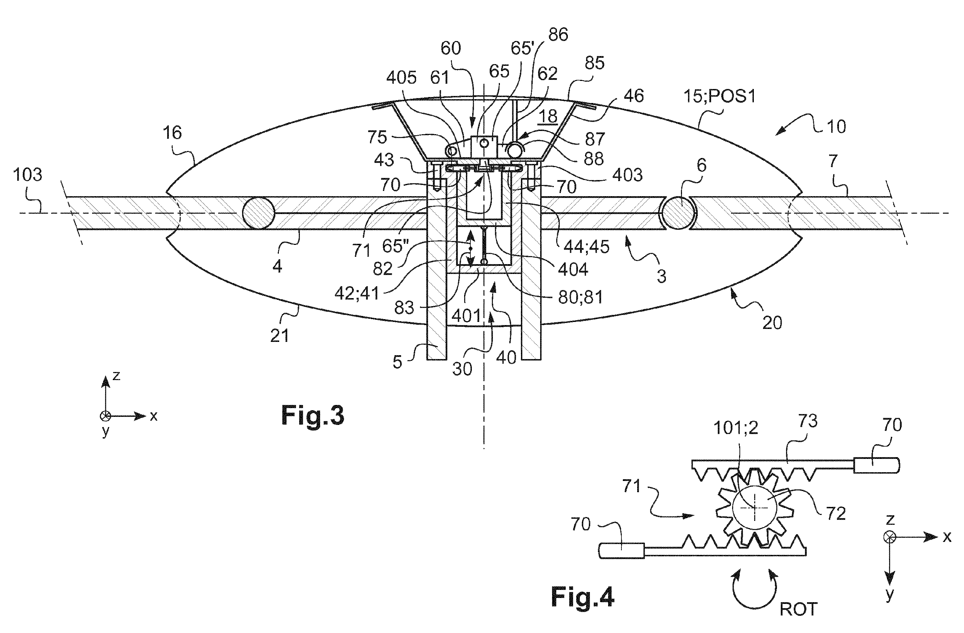

Les figures 3 à 8 illustrent un deuxième mode de réalisation, au moins partiellement mécanique.

En référence à la figure 3, le dispositif de mobilité 50 comporte une poignée 60 solidaire de la partie mobile 44.

La poignée 60 présentée est une poignée articulée. Cette poignée comporte alors un segment inférieur 61 qui est articulé à la partie mobile 44 ainsi qu'un segment supérieur 62 qui est articulé au segment inférieur 61.

Cette poignée 60 est logée dans un logement 18 interne de la demi-coquille supérieure 15. Ce logement 18 est délimité par le socle 46.

De plus, le logement est fermé de manière réversible par une trappe d'accès 85. La trappe d'accès 85 est articulée à la demi-coquille supérieure pour pouvoir effectuer un mouvement de pivotement. Ainsi, la trappe d'accès peut être manoeuvrée pour fermer ou ouvrir le logement 18.

De plus, la trappe d'accès 85 est munie d'une tirette 86. Cette tirette 86 s'étend longitudinalement de la trappe d'accès vers une extrémité libre 87 de cette tirette 86 portant un moyen d'agrafage élastique 88.

Lorsque la trappe d'accès est fermée, la tirette s'étend dans le logement, le moyen d'agrafage élastique 88 est en prise sur la poignée 60. Ainsi, la poignée tend à maintenir la trappe d'accès fermée.

Par ailleurs, la poignée 60 est reliée à la partie mobile 44 par un support 65. Ainsi, la section inférieure 61 est articulée à ce support 65.

De plus, le support 65 est articulé à la partie mobile 44 par une articulation. Cette articulation autorise alors un mouvement rotatif de la poignée par rapport à la partie mobile 44 autour de l'axe en élévation 101.

Par exemple, ce support 65 comporte une portion supérieure 65' reposant sur la partie mobile 44. De plus, le support comporte un pied 65" traversant une paroi supérieure de la partie mobile 44. Un moyen de roulement est alors éventuellement interposé entre cette paroi supérieure et le pied 65" du support.

En outre, le support 65 est relié à au moins un doigt de verrouillage 70 par une came 71. Par exemple, deux doigts de verrouillage sensiblement diamétralement opposés équipent la partie mobile.

La came 71 est par exemple logée dans la partie mobile 44. Par contre, chaque doigt de verrouillage 70 s'étend parallèlement au plan de jonction, en traversant par exemple une paroi verticale de la partie mobile.

En référence à la figure 4, la came 71 peut comprendre un cylindre denté 72 solidaire du pied 65" et une tige crénelée solidaire de chaque doigt de verrouillage 70. Par suite, une rotation ROT du support 65 induit une translation de chaque doigt de verrouillage 70 dans un plan horizontal.

Selon la variante de la figure 10, le pied 65" est relié à chaque doigt de verrouillage 70 par un système à bielles. Le pied 65" est ainsi solidaire d'une tige 500 reliée à chaque doigt de verrouillage 70 par une bielle 501.

En référence à la figure 3, la partie fixe 41 comporte alors au moins un orifice 75 par doigt de verrouillage 70. Par exemple, le cylindre fixe comporte un orifice par doigt de verrouillage.

Selon la figure 8, la partie fixe 41 peut comporter un orifice supérieur 77 à l'aplomb d'un orifice inférieur 76 pour chaque doigt de verrouillage 70.

Dès lors, lorsque les doigts de verrouillage sont agencés dans un orifice de verrouillage, la partie mobile est immobilisée en translation par rapport à la partie fixe de la glissière. Par suite, les doigts de verrouillage peuvent verrouiller de manière réversible la partie fixe par rapport à la partie mobile soit dans la position extrêmale fermée, soit dans la position extrêmale ouverte, soit dans la position extrêmale fermée et dans la position extrêmale ouverte.

En référence à la figure 3, le carénage 10 peut comporter un moyen d'assistance 80 pour assister la manoeuvre de la demi-coquille supérieure 15. Ce moyen d'assistance 80 comporte un organe élastique 81 exerçant un effort de déploiement 82 sur la demi-coquille supérieure 15 tendant à la positionner dans la position extrémale ouverte POS2. Cet effort de déploiement 82 est par exemple inférieur au poids 83 de la demi-coquille supérieure 15.

Cet organe élastique 81 est par exemple interposé entre la partie mobile 44 et la partie fixe 41.

La figure 3 présente un aéronef muni d'un carénage selon le deuxième mode de réalisation dans la position extrémale fermée.

L'organe élastique 81 est rétracté. De plus, la trappe d'accès est fermée et la tirette 86 est en prise sur la poignée.

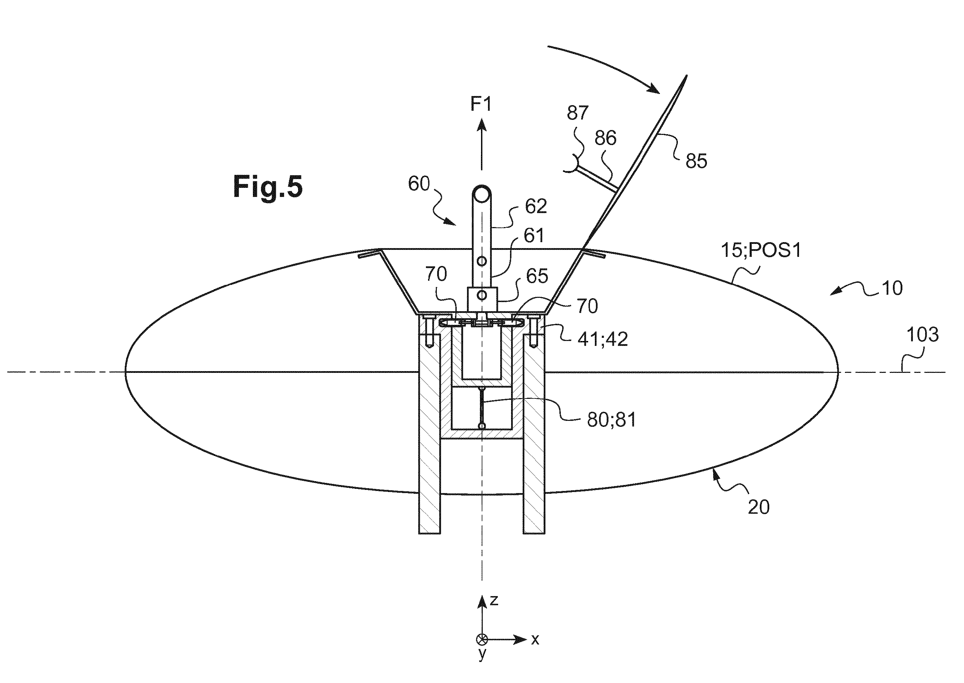

Pour effectuer une opération de maintenance et en référence à la figure 5, l'opérateur ouvre la trappe d'accès. La tirette exerce alors un effort F1 sur la poignée 60 pour la déployer. Le moyen d'agrafage élastique se détache ensuite de la poignée.

La demi-coquille supérieure 15 reste dans la position extrémale fermée.

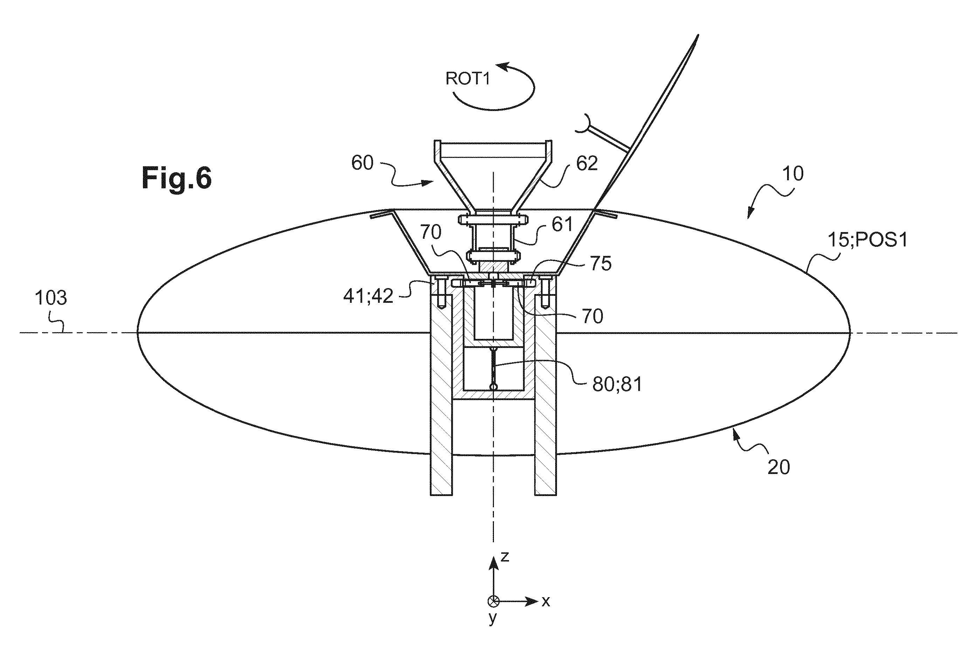

En référence à la figure 6, l'opérateur manoeuvre la poignée 60 pour lui faire effectuer un mouvement rotatif selon un premier sens ROT1.

Les doigts de verrouillage 70 sont alors rétractés dans la partie mobile en s'échappant des orifices de la partie fixe 41.

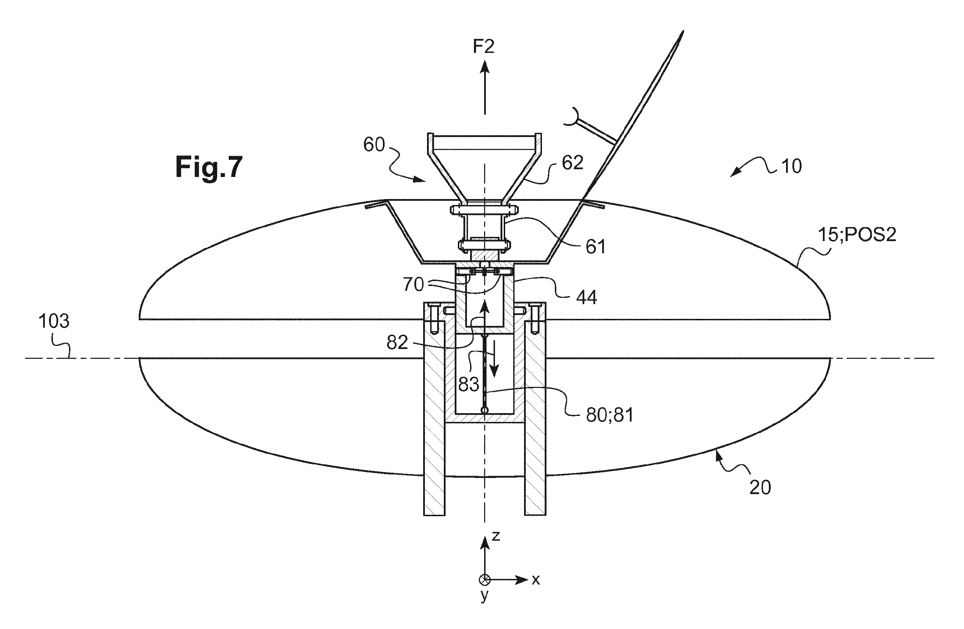

En référence à la figure 7, l'opérateur tire alors la poignée selon la flèche F2 pour déplacer la partie mobile 44. L'opérateur translate alors la demi-coquille supérieure 15 dans la position extrémale ouverte POS2. Cette translation est facilitée par le moyen d'assistance 80.

Eventuellement et selon la variante de la figure 8, l'opérateur tourne alors la poignée selon un deuxième sens pour réintroduire les doigts de verrouillage dans un orifice de la partie fixe. La demi-coquille supérieure 15 est alors verrouillée dans la position extrémale ouverte.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Carénage (10) d'un rotor (2), ledit carénage (10) comprenant une demi-coquille supérieure (15) destinée à être à l'aplomb d'une tête (3) de rotor, ladite demi-coquille supérieure (15) étant munie d'une unique coque supérieure (16) en forme de dôme,
**caractérisé en ce que** ladite demi-coquille supérieure (15) est mobile, ledit carénage (10) comportant un dispositif de déplacement (30) pour déplacer en élévation ladite demi-coquille supérieure (15), ledit dispositif de déplacement (30) comportant une glissière (40), ladite glissière (40) étant munie d'une partie fixe (41) destinée à être solidarisée à ladite tête (3) du rotor, ladite glissière (40) étant munie d'une partie mobile (44) solidarisée à la demi-coquille supérieure (15), ladite partie mobile (44) coulissant en élévation le long de ladite partie fixe (41) selon un axe en élévation (101), ledit dispositif de déplacement (30) comportant un dispositif de mobilité (50) coopérant avec ladite partie mobile (44) pour translater ladite partie mobile (44) par rapport à la partie fixe (41) entre une position extrémale fermée (POS1) et une position extrémale ouverte (POS2) incluses, ladite demi-coquille supérieure (15) étant dans la position extrémale fermée (POS1) en vol et dans la position extrémale ouverte (POS2) durant une opération de maintenance.

2. Carénage selon la revendication 1,
**caractérisé en ce que** ledit carénage (10) comporte un dispositif de signalisation (90) pour indiquer la position de la demi-coquille supérieure (15), ledit dispositif de signalisation (90) ayant au moins un capteur (93, 94) pour déterminer si la demi-coquille supérieure (15) est dans la position extrémale ouverte (POS2) et/ ou dans la position extrémale fermée (POS1) et un moyen de visualisation (95) relié audit capteur (93, 94).

3. Carénage selon l'une quelconque des revendications 1 à 2,
**caractérisé en ce que** ledit dispositif de mobilité (50) comporte un actionneur (51) attaché à ladite partie mobile (44).

4. Carénage selon l'une quelconque des revendications 1 à 2,
**caractérisé en ce que** ledit dispositif de mobilité (50) comporte une poignée (60) attachée à la partie mobile (44).

5. Carénage selon la revendication 4,
**caractérisé en ce que** ladite poignée (60) est une poignée articulée comportant un segment inférieur (61) articulé à la partie mobile (44) et un segment supérieur (62) articulé au segment inférieur (61).

6. Carénage selon l'une quelconque des revendications 4 à 5,
**caractérisé en ce que** ladite poignée (60) est logée dans un logement (18) interne de la demi-coquille supérieure (15), ledit logement (18) étant fermé de manière réversible par une trappe d'accès (85).

7. Carénage selon la revendication 6,
**caractérisé en ce que** ladite trappe d'accès (85) est munie d'une tirette (86), ladite tirette (86) comportant une extrémité libre (87) portant un moyen d'agrafage élastique (88) en prise sur ladite poignée (60) lorsque la trappe d'accès (85) ferme ledit logement (18).

8. Carénage selon l'une quelconque des revendications 4 à 7,
**caractérisé en ce que** ladite poignée (60) est reliée à la partie mobile (44) par un support (65), ledit support (65) étant articulé à la partie mobile (44) et étant mobile en rotation par rapport à la partie mobile (44) autour dudit axe en élévation (101), ledit support (65) étant relié à au moins un doigt de verrouillage (70) par une came (71) pour qu'une rotation du support (65) induise une translation de chaque doigt de verrouillage (70), ladite partie fixe (41) comportant au moins un orifice (75) par doigt de verrouillage (70), ladite partie mobile (44) étant immobilisée par rapport à la partie fixe (41) quand au moins un doigt de verrouillage (70) pénètre dans un desdits orifices (75).

9. Carénage selon la revendication 8,
**caractérisé en ce que** ladite partie fixe (41) comporte un orifice supérieur (77) à l'aplomb d'un orifice inférieur (76) pour chaque doigt de verrouillage (70), chaque doigt de verrouillage (70) étant logé dans un orifice supérieur (77) dans la position extrémale ouverte (POS2) de la demi-coquille supérieure (15), chaque doigt de verrouillage (70) étant logé dans un orifice inférieur (76) dans la position extrémale fermée (POS1) de la demi-coquille supérieure (15).

10. Carénage selon l'une quelconque des revendications 4 à 9,
**caractérisé en ce que** ledit carénage (10) comporte un moyen d'assistance (80) pour assister la manoeuvre de la demi-coquille supérieure (15), ledit moyen d'assistance (80) comportant un organe élastique (81) exerçant un effort de déploiement (82) sur la demi-coquille supérieure (15) tendant à la positionner dans la position extrémale ouverte (POS2).

11. Carénage selon la revendication 10,
**caractérisé en ce que** ledit organe élastique (81) est interposé entre la partie mobile (44) et la partie fixe (41).

12. Carénage selon l'une quelconque des revendications 10 à 11,
**caractérisé en ce que** ledit effort de déploiement (82) est inférieur au poids (83) de ladite demi-coquille supérieure (15).

13. Carénage selon l'une quelconque des revendications 1 à 12,
**caractérisé en ce que** ledit carénage (10) comporte une demi-coquille inférieure (20) en regard de la demi-coquille supérieure (15), une portion d'une périphérie de la demi-coquille supérieure (15) dite « périphérie supérieure de contact (17) » étant au niveau d'un plan de jonction (103) en contact étanche avec une portion d'une périphérie de la demi-coquille inférieure dite « périphérie inférieure de contact (22) » dans la position extrémale fermée (POS1), ledit plan de jonction (103) étant perpendiculaire à l'axe en élévation (101), la demi-coquille supérieure (15) comprenant une pluralité d'alvéoles (120) qui sont chacune en regard d'une alvéole (130) de la demi-coquille inférieure (20) pour permettre le passage d'une pale (5).

14. Carénage selon la revendication 13,
**caractérisé en ce que** la demi-coquille supérieure (15) et la demi-coquille inférieure (20) sont emboitées l'une dans l'autre dans la position extrémale fermée (POS1), la périphérie inférieure de contact (22) coopérant par interférence de forme avec la périphérie supérieure de contact (17).

15. Rotor (2) muni d'une tête (3) de rotor (2), ladite tête (3) du rotor (2) comportant d'une part un mât (5) tournant autour d'un axe de rotation (100) et d'autre part un moyeu (4) solidaire dudit mât (5), ledit moyeu (4) portant une pluralité de pales (5), ledit rotor (2) comportant un carénage (10),
**caractérisé en ce que** ledit carénage (10) est selon l'une quelconque des revendications 1 à 14, ladite partie fixe (41) étant solidarisée par des moyens de fixation (43) réversibles soit au moyeu soit au mât (5).

16. Rotor selon la revendication 15,
**caractérisé en ce que** ladite partie fixe (41) s'étend au moins partiellement dans ledit mât (5).

17. Rotor selon l'une quelconque des revendications 15 à 16,
**caractérisé en ce que** ledit carénage (10) s'étend en élévation le long d'un axe en élévation (101) confondu avec ledit axe de rotation (100).

18. Rotor selon l'une quelconque des revendications 15 à 17,
**caractérisé en ce que** ledit carénage (10) comportant une demi-coquille inférieure (20), ladite demi-coquille inférieure (20) est fixée à ladite tête (3) de rotor (2).

19. Aéronef (1),
**caractérisée en ce que** ledit aéronef (1) comporte un rotor (2) selon l'une quelconque des revendications 15 à 18.

## Patentansprüche

1. Verkleidung (10) eines Rotors (2), wobei die Verkleidung (10) eine obere Halbschale (15) aufweist, die dazu bestimmt ist, auf der Höhe eines Rotorkopfes (3) angeordnet zu sein, wobei die obere Halbschale (15) mit einem einzigen oberen kuppelförmigen Gehäuse ausgerüstet ist,
**dadurch gekennzeichnet, dass** die obere Halbschale (15) beweglich ist, wobei die Verkleidung (10) eine Verschiebevorrichtung (30) aufweist, zum Hochschieben der oberen Halbschale (15), wobei die Verschiebevorrichtung (30) eine Gleitschiene (40) aufweist, wobei die Gleitschiene (40) mit einem festen Teil (41) versehen ist, das dazu bestimmt ist, an dem Rotorkopf (3) befestigt zu werden, wobei die Gleitschiene (40) mit einem beweglichen Teil (44) versehen ist, welches an der oberen Halbschale (15) befestigt ist, wobei der bewegliche Teil (44) entlang dem festen Teil (41) entlang einer vertikalen Achse (101) in Höhenrichtung gleitet, wobei die Verschiebevorrichtung (30) eine Beweglichkeitsvorrichtung (50) aufweist, die mit dem beweglichen Teil (44) zusammenwirkt, um den beweglichen Teil (44) relativ zu dem festen Teil (41) zwischen einer geschlossenen Endposition (POS1) und einer offenen Endposition (POS2) zu verschieben, wobei die obere Halbschale (15) sich im Flug in ihrer geschlossenen Endstellung (POS1) und während Wartungsarbeiten in der offenen Endstellung (POS2) befindet.

2. Verkleidung nach Anspruch 1,
**dadurch gekennzeichnet, dass** die Verkleidung (10) eine Signalvorrichtung (90) aufweist, um die Stellung der oberen Halbschale (15) anzuzeigen, wobei die Signalvorrichtung (90) mindestens einen Sensor (93, 94) aufweist, um zu bestimmen, ob sich die obere Halbschale (15) in der offenen Endstellung (POS2) und/oder in der geschlossenen Endstellung (POS1) befindet, und ein Anzeigemittel (95), das mit dem Sensor (93, 94) verbunden ist.

3. Verkleidung nach einem der Ansprüche 1 bis 2,
**dadurch gekennzeichnet, dass** die Beweglichkeitsvorrichtung (50) ein Betätigungselement (51) aufweist, das an dem beweglichen Teil (44) befestigt ist.

4. Verkleidung nach einem der Ansprüche 1 bis 2,
**dadurch gekennzeichnet, dass** die Beweglichkeitsvorrichtung (50) einen Griff (60) aufweist, der an dem beweglichen Teil (44) befestigt ist.

5. Verkleidung nach Anspruch 4,
**dadurch gekennzeichnet, dass** der Griff (60) ein angelenkter Griff ist, der einen unteren Abschnitt (61) aufweist, der an dem beweglichen Teil (44) angelenkt ist, und einen oberen Abschnitt (62), der an dem unteren Abschnitt (61) angelenkt ist.

6. Verkleidung nach einem der Ansprüche 4 bis 5,
**dadurch gekennzeichnet, dass** der Griff (60) in einem inneren Sitz (18) der oberen Halbschale (15) untergebracht ist, wobei der Sitz (18) reversibel durch eine Zugangsklappe (85) verschlossen ist.

7. Verkleidung nach Anspruch 6,
**dadurch gekennzeichnet, dass** die Zugangsklappe (85) mit einer Zuggarnitur (86) versehen ist, wobei die Zuggarnitur (86) ein freies Ende (87) aufweist, das ein elastisches Umklammerungselement (88) aufweist, das mit dem Griff (60) in Eingriff steht, wenn die Zugangsklappe (85) den Sitz (18) verschließt.

8. Verkleidung nach einem der Ansprüche 4 bis 7,
**dadurch gekennzeichnet, dass** der Griff (60) mit dem beweglichen Teil (44) über einen Träger (65) verbunden ist, wobei der Träger (65) an dem beweglichen Teil (44) angelenkt ist und bezüglich des beweglichen Teils (44) um die vertikale Achse (101) drehbeweglich ist, wobei der Träger (85) mit mindestens einem Verriegelungsfinger (70) durch eine Nocke (71) verbunden ist, damit eine Drehung des Trägers (65) eine Translationsbewegung eines jeden Verriegelungsfingers (70) bewirkt, wobei der feste Teil (41) mindestens eine Öffnung (75) pro Verriegelungsfinger (70) aufweist, wobei der bewegliche Teil (44) relativ zu dem festen Teil (41) blockiert ist, wenn mindestens ein Verriegelungsfinger (70) in eine der Öffnungen (75) eindringt.

9. Verkleidung nach Anspruch 8,
**dadurch gekennzeichnet, dass** der feste Teil (41) eine obere Öffnung (77) für jeden Verriegelungsfinger (70) aufweist, der mit einer unteren Öffnung (76) fluchtet, wobei jeder Verriegelungsfinger (70) in der offenen Endstellung (POS2) der oberen Halbschale (15) in einer oberen Öffnung (77) untergebracht ist, wobei jeder Verriegelungsfinger (70) in der geschlossenen Endstellung (POS1) der oberen Halbschale (15) in der unteren Öffnung (76) untergebracht ist.

10. Verkleidung nach einem der Ansprüche 4 bis 9,
**dadurch gekennzeichnet, dass** die Verkleidung (10) ein Hilfsmittel (80) aufweist zur Unterstützung der Betätigung der oberen Halbschale (15), wobei das Hilfsmittel (80) ein elastisches Element (81) aufweist, das eine Öffnungskraft (82) auf die obere Halbschale (15) ausübt zur Positionierung der oberen Halbschale (15) in der offenen Endstellung (POS2).

11. Verkleidung nach Anspruch 10,
**dadurch gekennzeichnet, dass** das elastische Element (81) zwischen dem beweglichen Teil (44) und dem festen Teil (41) angeordnet ist.

12. Verkleidung nach einem der Ansprüche 10 bis 11,
**dadurch gekennzeichnet, dass** die Öffnungskraft (82) kleiner ist als das Gewicht (83) der oberen Halbschale (15).

13. Verkleidung nach einem der Ansprüche 1 bis 12,
**dadurch gekennzeichnet, dass** die Verkleidung (10) eine untere Halbschale (20) gegenüber der oberen Halbschale (15) aufweist, wobei ein Bereich eines Randes der oberen Halbschale (15), der "oberer Kontaktrand (17)" genannt wird, auf der Höhe einer Verbindungsebene (103) in dichtem Kontakt mit einem Bereich eines Randes der unteren Halbschale, der "unterer Kontaktrand (22)" genannt wird, in der geschlossenen Endstellung (POS1) steht, wobei die Verbindungsebene (103) senkrecht zu der vertikalen Achse (101) verläuft, wobei die obere Halbschale (15) eine Mehrzahl von Ausnehmungen (120) aufweist, die jeweils gegenüber einer Ausnehmung (130) der unteren Halbschale (20) liegen, um den Durchgang eines Rotorblatts (5) zu ermöglichen.

14. Verkleidung nach Anspruch 13,
**dadurch gekennzeichnet, dass** die obere Halbschale (15) und die untere Halbschale (20) in der geschlossenen Endstellung (POS1) ineinandergefügt sind, wobei der untere Kontaktrand (22) formschlüssig mit dem oberen Kontaktrand (17) zusammenwirkt.

15. Rotor (2) mit einem Rotorkopf (3), wobei der Rotorkopf (3) einerseits eine Welle (5) aufweist, die sich um eine Rotationsachse (100) dreht, und andererseits eine Nabe (4), die mit der Welle (5) fest verbunden ist, wobei die Nabe (4) eine Mehrzahl von Rotorblättern (5) trägt, wobei der Rotor (2) eine Verkleidung (10) aufweist,
**dadurch gekennzeichnet, dass** die Verkleidung (10) eine Verkleidung gemäß einem der Ansprüche 1 bis 14 ist, wobei der feste Teil (41) durch die reversiblen Befestigungsmittel (43) entweder mit der Nabe oder mit der Welle (5) fest verbunden ist.

16. Rotor nach Anspruch 15,
**dadurch gekennzeichnet, dass** der feste Teil (41) sich zumindest teilweise in die Welle (5) hinein erstreckt.

17. Rotor nach einem der Ansprüche 15 bis 16,
**dadurch gekennzeichnet, dass** die Verkleidung (10) sich in der Höhe entlang einer vertikalen Achse (101) erstreckt, die mit der Rotationsachse (100) verschmilzt.

18. Rotor nach einem der Ansprüche 15 bis 17,
**dadurch gekennzeichnet, dass** die Verkleidung (10) eine untere Halbschale (20) aufweist, wobei die untere Halbschale (20) an dem Rotorkopf (3) befestigt ist.

19. Luftfahrzeug (1),
**dadurch gekennzeichnet, dass** das Luftfahrzeug (1) einen Rotor (2) gemäß einem der Ansprüche 15 bis 18 aufweist.

## Claims

1. Fairing (10) of a rotor (2), said fairing (10) comprising an upper half-shell (15) intended to be vertically in line with a rotor head (3), said upper half-shell (15) being provided with a single dome-shaped upper body (16),
**characterised in that** said upper half-shell (15) is movable, said fairing (10) comprising a movement device (30) for moving said upper half-shell (15) in elevation, said movement device (30) comprising a slide (40), said slide (40) being provided with a stationary part (41) intended to be secured to said head (3) of the rotor, said slide (40) being provided with a movable part (44) secured to the upper half-shell (15), said movable part (44) sliding in elevation along said stationary part (41) along an axis in elevation (101), said movement device (30) comprising a mobility device (50) cooperating with said movable part (44) to translate said movable part (44) relative to the stationary part (41) between a closed extreme position (POS1) and an open extreme position (POS2) inclusive, said upper half-shell (15) being in the closed extreme position (POS1) in flight and in the open extreme position (POS2) during a maintenance operation.

2. Fairing according to claim 1,
**characterised in that** said fairing (10) comprises a signalling device (90) for indicating the position of the upper half-shell (15), said signalling device (90) having at least one sensor (93, 94) for determining whether the upper half-shell (15) is in the open extreme position (POS2) and/or in the closed extreme position (POS1) and a display means (95) connected to said sensor (93, 94).

3. Fairing according to any one of claims 1 to 2,
**characterised in that** said mobility device (50) comprises an actuator (51) attached to said movable part (44).

4. Fairing according to any one of claims 1 to 2,
**characterised in that** said mobility device (50) comprises a handle (60) attached to the movable part (44).

5. Fairing according to claim 4,
**characterised in that** said handle (60) is an articulated handle comprising a lower segment (61) articulated to the movable part (44) and an upper segment (62) articulated to the lower segment (61).

6. Fairing according to any one of claims 4 to 5,
**characterised in that** said handle (60) is housed in an internal housing (18) of the upper half-shell (15), said housing (18) being reversibly closed by an access hatch (85).

7. Fairing according to claim 6,
**characterised in that** said access hatch (85) is provided with a pull rod (86), said pull rod (86) comprising a free end (87) carrying an elastic clip means (88) engaged on said handle (60) when the access hatch (85) closes said housing (18).

8. Fairing according to any one of claims 4 to 7, **characterised in that** said handle (60) is connected to the movable part (44) by a support (65), said support (65) being articulated to the movable part (44) and being movable in rotation relative to the movable part (44) about said axis in elevation (101), said support (65) being connected to at least one locking finger (70) by a cam (71) so that a rotation of the support (65) causes a translation of each locking finger (70), said stationary part (41) comprising at least one orifice (75) per locking finger (70), said movable part (44) being immobilised relative to the stationary part (41) when at least one locking finger (70) penetrates into one of said orifices (75).

9. Fairing according to claim 8,
**characterised in that** said stationary part (41) comprises an upper orifice (77) vertically in line with a lower orifice (76) for each locking finger (70), each locking finger (70) being housed in an upper orifice (77) in the open extreme position (POS2) of the upper half-shell (15), each locking finger (70) being housed in a lower orifice (76) in the closed extreme position (POS1) of the upper half-shell (15).

10. Fairing according to any one of claims 4 to 9,
**characterised in that** said fairing (10) comprises an assistance means (80) for assisting the operation of the upper half-shell (15), said assistance means (80) comprising an elastic member (81) exerting a deployment force (82) on the upper half-shell (15) tending to position it in the open extreme position (POS2).

11. Fairing according to claim 10,
**characterised in that** said elastic member (81) is interposed between the movable part (44) and the stationary part (41).

12. Fairing according to any one of claims 10 to 11,
**characterised in that** said deployment force (82) is less than the weight (83) of said upper half-shell (15).

13. Fairing according to any one of claims 1 to 12,
**characterised in that** said fairing (10) comprises a lower half-shell (20) facing the upper half-shell (15), a portion of a periphery of the upper half-shell (15) referred to as the "upper contact periphery (17)" being in sealed contact, at the level of a junction plane (103), with a portion of a periphery of the lower half-shell referred to as the "lower contact periphery (22)" in the closed extreme position (POS1), said junction plane (103) being perpendicular to the axis in elevation (101), the upper half-shell (15) comprising a plurality of cavities (120) which each face a cavity (130) of the lower half-shell (20) in order to allow the passage of a blade (5).

14. Fairing according to claim 13,
**characterised in that** the upper half-shell (15) and the lower half-shell (20) are engaged one in the other in the closed extreme position (POS1), the lower contact periphery (22) cooperating by shape interference with the upper contact periphery (17).

15. Rotor (2) provided with a rotor (2) head (3), said rotor (2) head (3) comprising on the one hand a mast (5) rotating about an axis of rotation (100) and on the other hand a hub (4) secured to said mast (5), said hub (4) carrying a plurality of blades (5), said rotor (2) comprising a fairing (10),
**characterised in that** said fairing (10) is according to any one of claims 1 to 14, said stationary part (41) being secured by reversible fastening means (43) either to the hub or to the mast (5).

16. Rotor according to claim 15,
**characterised in that** said stationary part (41) extends at least partially in said mast (5).

17. Rotor according to any one of claims 15 to 16,
**characterised in that** said fairing (10) extends in elevation along an axis in elevation (101) coinciding with said axis of rotation (100).

18. Rotor according to any one of claims 15 to 17,
**characterised in that** said fairing (10) comprising a lower half-shell (20), said lower half-shell (20) is fastened to said rotor (2) head (3).

19. Aircraft (1),
**characterised in that** said aircraft (1) comprises a rotor (2) according to any one of claims 15 to 18.
